# EUROPEAN PATENT SPECIFICATION

(11) **EP 0 490 002 B1**
(45) Date of publication and mention of the grant of the patent: **27.03.1996**
(21) Application number: 90313679.4
(22) Date of filing: 14.12.1990
(51) Int. Cl.: H04L 29/06

(54) **A flag counter circuit**
Flagzählerschaltung
Circuit compteur de drapeaux

(43) Date of publication of application: 17.06.1992
(73) Proprietor: RESEARCH MACHINES PLC, Milton, Abingdon Oxon OX14 4 SE (GB)
(72) Inventor: Davidson, Douglas Stuart, Cumnor, Oxford, OX2 9PU (GB)
(74) Representative: Unwin, Stephen Geoffrey

(56) References cited:
- GB-A- 1 428 149
- US-A- 4 974 223
- IBM TECHNICAL DISCLOSURE BULLETIN, vol. 15, no. 2, July 1972, pages 589-590,New York, US; D. KARP et al.: "Continuous communications line synchronization"

## Description

This invention relates to a flag counter circuit for counting pre-amble and post-amble synchronisation characters in a serial bit stream transmitted from one computer to another in a local area network (LAN)

Whenever a serial bit stream is to be transmitted along a network bus from one computer to another, all computers connected to the bus must receive a synchronisation character before the remainder of the serial bit stream can be transmitted. For this reason, the synchronisation field of the serial bit stream may comprise 40-60 characters and thus last several milliseconds so as to ensure that all computers on the network are synchronised. The more computers on the network or the longer the bus between them, the greater the number of synchronisation characters that must be provided to ensure that all parts of the network are synchronised before the remainder of the serial bit stream is transmitted. In practice, the duration of the synchronisation field is arranged to be at least twice as long as the round trip delay of the network bus.

In the past, local area networks between two or more computers using carrier sense multiple access/collision detection (CSMA/CD) protocols, or other high level data link control (HDLC) protocols have performed the task of waiting for transport layer synchronisation character periods to complete by using a central processor unit (CPU) of the computer transmitting or receiving a serial bit stream signal to poll cable status registers when the signal is being received or to time transmission periods when the signal is being transmitted.

An alternative technique, during transmit operations, has been to use dedicated hardware timer peripheral circuit to generate an interrupt request a pre-determined time after the start of the signal to allow an approximate number of synchronisation characters to be generated. Thus, in a transmission operation, the following steps occur:
(1) the transmitter waits for the bus to become free
(2) the transmitter then starts a continuous transmission of synchronisation characters
(3) a timer circuit is programmed to time a given period t = number of synchronisation characters to be transmitted x the time duration of one synchronisation character
(4) after time t has elapsed, an interrupt request signal is generated by the timer circuit
(5) in response to the interrupt request signal, the transmitter ceases transmission of synchronisation characters and begins the transmission of packet data.

Against a background of increasing demands on CPU bandwidth, particularly in single CPU systems such as personal computers (PCs), these known techniques have resulted in high usage of CPU time and resulted in inaccurate numbers of synchronisation characters being generated or detected. Such inaccuracy is inherent in systems that time periods rather than count the number of synchronisation characters due to rounding errors and the accuracy of the clock signal used. The rounding error may, for instance, be plus or minus one within a count of 20 or 30 and the clock signal may be innacurate to 1-2%.

According to the present invention, there is provided a flag counter circuit for counting pre-amble and post-amble synchronisation characters in a serial bit stream transmitted from one computer to another in a local area network, the circuit comprising: detector means for detecting the synchronisation characters of a serial bit stream and generating a synchronous output pulse for each synchronisation character detected; counter means for counting the number of output pulses generated by the detector means and generating a terminal count output signal when a predetermined number of output pulses have been counted; and interrupter means for generating an interrupt request signal for the computer transmitting or receiving the serial bit stream on receipt of the terminal count output signal.

Preferred features of the invention will be apparent from the following description and the subsidiary claims of the specification.

The invention will now be further described, merely by way of examples, with reference to the accompanying drawings, in which:-
Figure 1 is a block level schematic diagram of a CSMA/CD LAN interface incorporating a flag counter circuit according to an embodiment of the invention; and
Figures 2, 3 and 4 are more detailed schematic diagrams of the three main functional units of the flag counter circuit shown in Figure 1, namely a synchronisation character detection circuit, a programmable counter circuit and an interrupt request generator circuit.

The flag counter circuit 1 illustrated in the drawings detects and counts a programmable number of CSMA/CD pre-amble and post-amble synchronisation characters and then generates a system level interrupt request. It thus counts the LAN synchronisation characters without involving the CPU of the computer receiving or transmitting the signal in this overhead task. The flag counter circuit therefore removes from the CPU the overhead task of waiting for synchronisation characters to complete by using hardware to detect and count the synchronisation characters and generate a real time interrupt request when a predetermined number of characters have been detected. This is done for both the transmission and reception of synchronisation characters.

Thus, during a transmission operation the steps (1) and (2) described above occur, then the steps:
(3) a count value for the number of synchronisation characters to be generated is programmed
(4) when the set number of synchronisation characters have been generated, an interrupt request signal is generated.
Step (5) then occurs as described above.

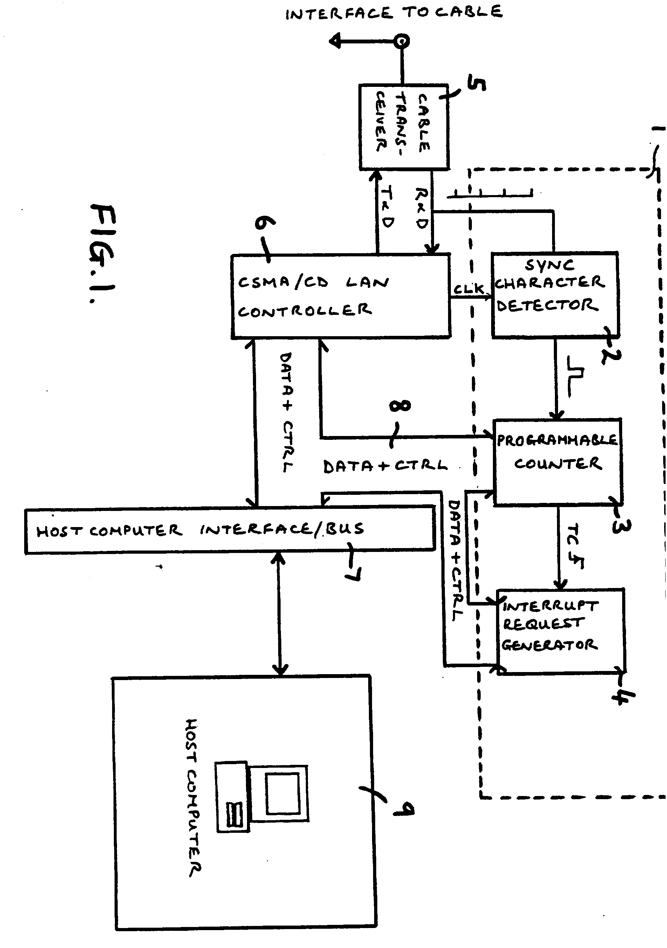

The three main functional units of the flag counter circuit 1 are shown within dashed lines in Figure 1. The circuit comprises a synchronisation character detection circuit 2, a programmable counter circuit 3 and an interrupt request circuit 4. The flag counter circuit 1 is connected to a cable transceiver 5, a CSMA/CD LAN controller 6 and a host computer interface/bus 7 as shown in Figure 1. The CSMA/CD controller 6, programmable counter circuit 3, interrupt request circuit 4 and the interface/bus 7 are linked by a data and control bus 8. The host computer 9 is also shown in Figure 1.

The synchronisation character detection circuit 2 is connected to the cable transceiver 5 to receive serial bit streams which are to be transmitted from or received by the host computer 8. It is also connected to receive a clock signal from the CSMA/CD LAN controller 6. The function of the synchronisation character detection circuit 2 is to generate a synchronous output pulse for each synchronisation character detected in the serial bit stream.

The programmable counter circuit 3 is connected to receive the output pulses from the synchronisation character detection circuit 2 and is also connected to the data and control bus 8. The function of the programmable counter circuit 3 is to count the number of output pulses generated by the synchronisation character detection circuit 2 and to generate a terminal count output signal when a predetermined number of output pulses has been counted.

The interrupt request circuit 4 is connected to receive output signals from the programmable counter circuit 3 and is connected to the data and control bus 8. The function of the interrupt request circuit 4 is to generate an interrupt request signal for the computer which is to transmit or receive the serial bit stream on receipt of a terminal count output signal from the programmable counter circuit 3.

The use of a counter circuit rather than a timer circuit, helps reduce the CPU overhead time by eliminating the inaccuracies referred to above which are inherent in a system which times periods. The provision of a counter circuit is usually also more convenient, simpler and less expensive than a timer circuit particularly as counters tend to be provided in blocks of four. The counter circuit may, for example, be conveniently incorporated into a gate array used for other purposes.

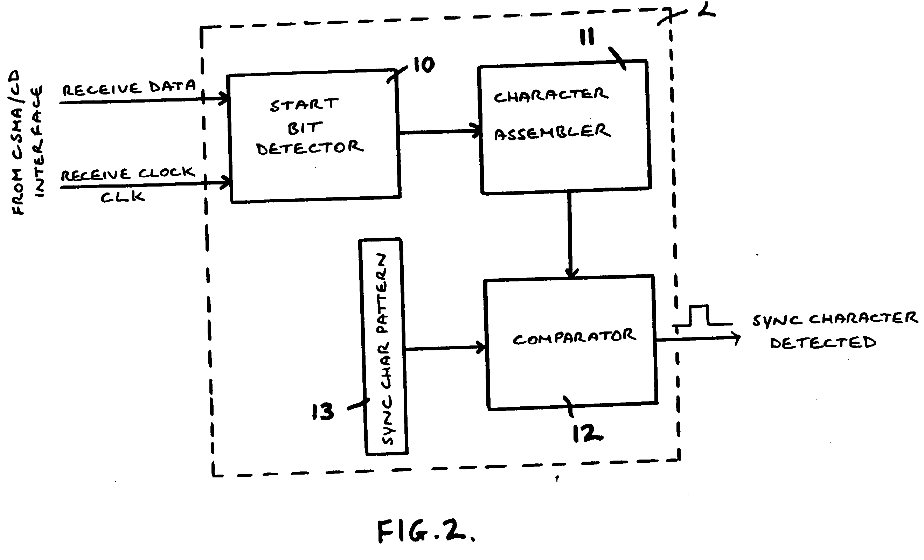

Details of preferred forms of the synchronisation character detection circuit 2, programmable counter circuit 3 and interrupt request circuit 4 will now be given with reference to Figures 2, 3 and 4, respectively.

As shown in Figure 2, the synchronisation character detection circuit 2 comprises a start bit detector circuit 10 connected to receive the serial bit stream from the cable transceiver 5 and a clock signal from the CSMA/CD LAN controller 6. The start bit receiver circuit 10 detects the start bit of a series of synchronisation characters in the serial bit stream. When a start bit has been detected, a character assembler circuit 11 assembles the synchronisation characters received and passes this to a comparator circuit 12. The comparator circuit 12 compares the synchronisation character received from the character assembler circuit 11 with synchronisation characters stored in a memory 13. If the synchronisation character received from the character assemble circuit 11 matches one of those stored in the memory 13, the comparator circuit 12 generates a synchronous output pulse which is passed to the programmable counter circuit 11.

The implementation of the synchronisation character detection circuit 3 depends upon the protocol and the specific synchronisation characters used by that protocol. This circuit may be conveniently implemented in a standard serial data link control (SDLC) controller peripheral integrated circuit (IC), such as a Z-8530 serial communication controller (SCC).

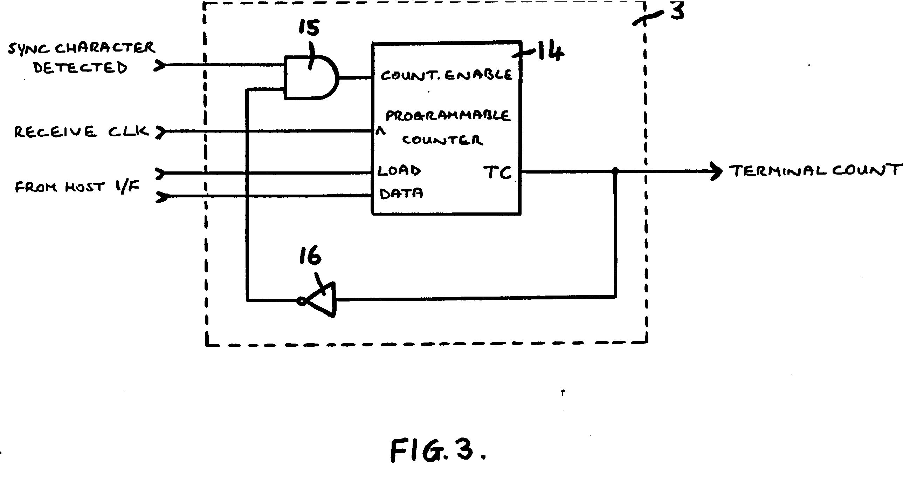

As shown in Figure 3, the programmable counter circuit 3 may be implemented as a synchronous down-counter, without reload or wrap-around on reaching the terminal count. The circuit comprises a programmable counter 14 connected to the host computer interface/bus 7, to receive a clock signal and to receive the output pulse from the synchronisation character detection circuit 2 via an AND gate 15. The other input of the AND gate 15 is connected to the output of the programmable counter 14 via a NOR gate 16. The programmable counter 14 is loadable with a count value under the control of the CPU of the host computer 9, the count value determining the number of synchronisation characters that will be counted before the terminal count output signal is generated.

The programmable counter circuit 3 is conveniently implemented in discrete logic or as part of a user specified integrated circuit (USIC).

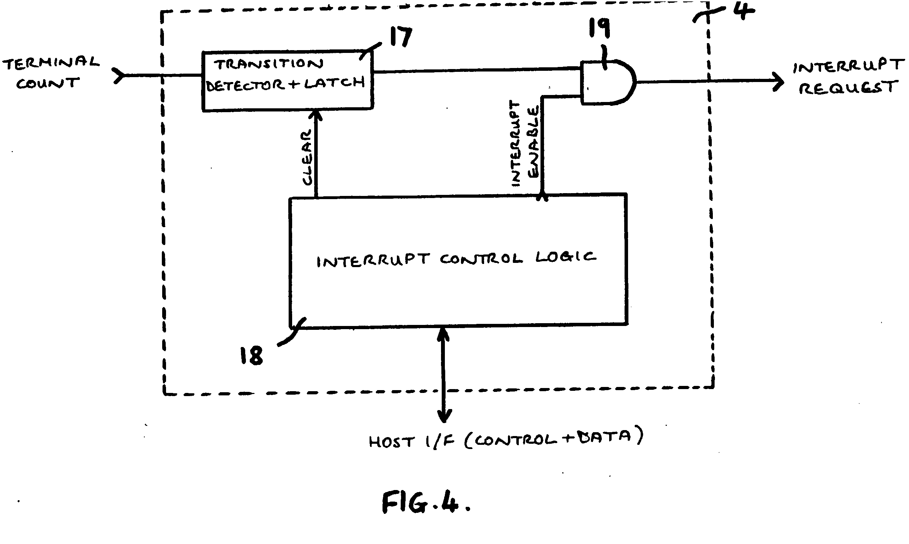

As shown in Figure 4, the interrupt request circuit 4 comprises a transition detector and latch circuit 17 connected to receive the terminal count output signal from the programmable counter circuit 3, an interrupt control logic circuit 18 connected to the host computer interface/bus 7 and an AND gate 19 connected to outputs of these circuits 17 and 18. When the terminal count output signal is received, the transition detector and latch circuit 17 asserts an interrupt request signal which is latched active. The signal is gated by the interrupt control logic circuit 18. In response to the interupt request signal, the CPU is made available to receive or transmit the serial bit stream. When the request signal has been serviced, a service register bit is asserted by the logic circuit 18 to clear the detector and latch circuit 17.

The precise manner in which the interrupt circuit 4 is arranged to function will depend on whether the circuit is to be used in an edge sensitive or level sensitive interrupt request environment. Either may be used.

The interrupt request circuit 4 is again conveniently implemented in discrete logic or as part of a USIC.

The type of flag counter circuit described above is applicable to micro, mini and mainframe computer networks using HDLC protocols such as CSMA/CD and CSMA/CA.

The main improvements over past techniques are:
* Reduced CPU overhead in the task of detecting or generating synchronisation fields in CSMA/CD LAN interfaces
* Potentially reduced LAN cable occupation period by increased accuracy and determinancy of synchronisation field duration.
* Potentially reduced LAN cable occupation period by improved precision in the number of synchronisation characters generated.

## Claims

1. A flag counter circuit for counting pre-amble and post-amble synchronisation characters in a serial bit stream transmitted from one computer to another in a local area network, the circuit comprising: detector means (2) for detecting the synchronisation characters of a serial bit stream and generating a synchronous output pulse for each synchronisation character detected; counter means (3) for counting the number of output pulses generated by the detector means (2) and generating a terminal count output signal when a predetermined number of output pulses have been counted; and interrupter means (4) for generating an interrupt request signal for the computer transmitting or receiving the serial bit stream on receipt of the terminal count output signal.

2. A flag counter circuit as claimed in claim 1 for use with a local area network using a carrier sense multiple access/collision detection (CSMA/CD) protocol.

3. A flag counter circuit as claimed in claim 1 and 2 in which the detector means (2) comprises a start bit detector (10) for detecting the start bit of a synchronisation character, a character assembler (11) for regenerating the synchronisation character detected and comparator means (12) for comparing the regenerated synchronisation character with synchronisation character patterns held in memory (13) and providing the synchronous output pulse if this matches one of these patterns.

4. A flag counter circuit as claimed in claims 1, 2 and 3 in which the counter means (3) comprises a programmable, synchronous down-counter (14) arranged to generate the terminal count output signal when it has counted down from the predetermined number to zero.

5. A flag counter circuit as claimed in any preceding claim in which the interrupter means (4) comprises a transition detector and latch (17) arranged to assert an interrupt request signal on receipt of the terminal count output signal.

## Patentansprüche

1. Eine Flagzählerschaltung zum Zählen von Präambel- und Postambelsynchronisierzeichen in einem von einem Computer auf einen anderen in einem lokalen Netz übertragenen seriellen Bitstrom, wobei diese folgende Stufen umfaßt: ein Detektormittel (2) zum Nachweisen der Synchronisierzeichen eines seriellen Bitstroms und zum Erzeugen eines synchronen Ausgangsimpulses für jedes der nachgewiesenen Synchronisierzeichen; ein Zählermittel (3) zum Zählen der Anzahl von durch die Detektormittel (2) erzeugten Ausgangsimpulsen und zum Erzeugen eines Endzählwert-Ausgangssignals, wenn eine vorbestimmte Anzahl von Ausgangsimpulsen gezählt wurde; und ein Unterbrechermittel (4) zum Erzeugen eines Unterbrechungsanforderungsignals für den Computer, der den seriellen Bitstrom bei Empfang des Endzählwert-Ausgangssignals sendet bzw. empfängt.

2. Eine Flagzählerschaltung nach Anspruch 1 zur Verwendung mit einem Lokalnetz, bei dem von einem Protokoll für Mehrfachzugriff mit Kollisionserkennung (CSMA/CD) Gebrauch gemacht wird.

3. Eine Flagzählerschaltung nach Anspruch 1 und 2, bei der das Detektormittel (2) einen Startbitdetektor (10) zum Nachweisen des Startbits eines Synchronisierzeichens umfaßt, sowie einen Zeichenassembler (11) zum Neuerstellen des nachgewiesenen Synchronisierzeichens und ein Vergleichstufenmittel (12) zum Vergleichen des neu erstellten synchronisierzeichens mit in dem Speicher (13) gespeicherten Synchronisierzeichenmustern und zum Liefern des synchronen Ausgangsimpulses, wenn dieser mit einem dieser Muster übereinstimmt.

4. Eine Flagzählerschaltung nach den Ansprüchen 1, 2 und 3, bei dem das Zählermittel (3) einen programmierbaren, synchronen Rückwärtszähler (14) umfaßt, der so angeordnet ist, daß er daß Endzählwertausgangssignal erzeugt, sobald er von der vorbestimmten Zahl auf Null zurückgezählt hat.

5. Eine Flagzählerschaltung nach einem der vorstehenden Ansprüche, bei der das Unterbrechermittel (4) einen Übergangsdetektor mit Verriegelungsschaltung (17) umfaßt, der so angeordnet ist, daß er bei Erhalt des Endzählwertausgangssignals ein Unterbrechungsanforderungssignal aufdrückt.

## Revendications

1. Circuit compteur de drapeaux pour compter les caractères de synchronisation initiale et finale dans un train binaire série transmis d'un ordinateur à un autre dans un réseau local, le circuit comprenant : un moyen détecteur (2) pour détecter les caractères de synchronisation d'un train binaire série et produire une impulsion de sortie synchrone pour chaque caractère de synchronisation détecté ; un moyen compteur (3) pour compter le nombre d'impulsions de sortie produites par le moyen détecteur (2) et produire un signal de sortie de comptage final lorsqu'un nombre prédéterminé d'impulsions de sortie ont été comptées ; et un moyen interrupteur (4) pour produire un signal de demande d'interruption pour l'ordinateur émettant ou recevant le train binaire série à réception du signai de sortie de comptage final.

2. Circuit compteur de drapeaux selon la revendication 1 devant être utilisé avec un réseau local utilisant un protocole à accès multiple avec écoute de la porteuse/détection de collision (CSMA/CD).

3. Circuit compteur de drapeaux selon les revendications 1 et 2 dans lequel le moyen détecteur (2) comprend un détecteur de bit de départ (10) pour détecter le bit de départ d'un caractère de synchronisation, un assembleur de caractères (11) pour régénérer le caractère de synchronisation détecté et un moyen comparateur (12) pour comparer le caractère de synchronisaticn régénéré avec des configurations de caractères de synchronisation gardées en mémoire (13) et fournir l'impulsion de sortie synchrone si ledit caractère correspond à l'une de ces configurations.

4. Circuit compteur de drapeaux selon les revendications 1, 2 et 3 dans lequel le moyen compteur (3) comprend un compteur à rebours synchrone programmable (14) disposé pour produire le signal de sortie de comptage final lorsqu'il a décompté du nombre prédéterminé jusqu'à zéro.

5. Circuit compteur de drapeaux selon l'une quelconque des revendications précédentes, dans lequel le moyen interrupteur (4) comprend un détecteur de transition et une bascule (17) disposés pour déclencher un signal de demande d'interruption à réception du signal de sortie de comptage final.
